(19) Europäisches Patentamt / European Patent Office / Office européen des brevets

(11) **EP 2 501 033 B1**

(12) **EUROPEAN PATENT SPECIFICATION**

(45) Date of publication and mention
of the grant of the patent:
**14.02.2018 Bulletin 2018/07**

(51) Int Cl.:
*H02P 6/28* *(2016.01)*      *H02P 7/292* *(2016.01)*

(21) Application number: **12159512.8**

(22) Date of filing: **14.03.2012**

(54) **Control systems and methods for electronically commutated motors**

Steuerungssysteme und -verfahren für elektronisch geschaltete Motoren

Systèmes et procédés de commande pour moteurs à commutation électronique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2011 US 201161453125 P**

(43) Date of publication of application:
**19.09.2012 Bulletin 2012/38**

(73) Proprietor: **Johnson Controls Technology Company**
**Milwaukee, WI 53209 (US)**

(72) Inventors:
• **Rudich, George**
**Cedarburg, Wisconsin 53012 (US)**

• **Riesch, Timothy J**
**Germantown, Wisconsin 53022 (US)**
• **Heckenbach, Terry**
**Cedarburg, Wisconsin 53012 (US)**

(74) Representative: **Potter Clarkson LLP**
**The Belgrave Centre**
**Talbot Street**
**Nottingham NG1 5GG (GB)**

(56) References cited:
**EP-A1- 2 096 744**      **WO-A1-97/41558**
**WO-A2-03/038985**      **US-A- 6 023 143**

**Description**

CROSS-REFERENCE TO RELATED APPLICATIONS

This application claims the benefit of and priority to U.S. Provisional Patent Application No. 61/453,125, filed March 15, 2011 , which is incorporated herein by reference in its entirety.

BACKGROUND

The present invention relates generally to the field of building automation systems. The present invention further relates to control systems and methods for electronically commutated (EC) motors used in, e.g., building automation systems. EC motors are electric motors powered by direct-current (DC) electricity and having electronic commutation systems, rather than mechanical commutators or brushes. EC motors are often referred to as brushless DC motors (i.e., BLDC motors, BL motors). EC motors are often described as stepper motors having permanent magnets in the rotor that are pulled into alignment by timed stator windings. In the field of building automation systems, EC motors are sometimes used in heating, cooling, air conditioning, ventilation, and refrigeration applications instead of AC motors because EC motors are often more efficient than typical AC motors. Although most often used in fan motor applications, EC motors can be used in other applications (e.g., pumps) and other fields (e.g., industrial engineering, model engineering, transportation, etc.).

One problem encountered by the Applicants is that a typical EC motor accepts an input signal across a range of volts DC (e.g., 0-10 volts DC). As input increases toward 10 volts DC, the motor speed increases to its maximum rated speed. However, on the low end of this input range, the motor does not run at all. For example, the motor will not begin running until the input speed reference is at least 2 volts DC. At that point the motor will run at its "minimum speed," a speed that is typically fixed.

A conventional approach to current controlled motor amplifier design is disclosed in WO 03/038985, wherein a current controlled motor amplifier system comprises a current source means on each leg of a top half of an H bridge configuration and switching means on each leg of a bottom half of the H bridge configuration.

SUMMARY

One embodiment of the invention relates to a controller for varying the voltage provided to an electronically commutated motor. The controller includes a circuit configured to generate both a pulse voltage direct current output and a continuous or proportional direct current output. The circuit is configured to run the electronically commutated motor at an average speed that is below its minimum rated speed using the pulse voltage direct current. The circuit may include a module configured to determine when to switch between the pulse voltage direct current output and the continuous direct current output based on a predetermined threshold. The circuit is configured to automatically switch between providing the continuous direct current output when a controller speed setpoint requires a motor speed above the minimum rated speed and providing the pulse voltage direct current output when the controller speed setpoint requires a motor speed below the minimum rated speed. The predetermined threshold may be user input, a minimum speed for the electronically commutated motor that is stored in memory, or a threshold above the minimum speed that is selected for efficiency.

Another embodiment of the present invention relates to a method for varying the voltage provided to an electronically commutated motor. The method includes using a circuit to monitor a control signal for the electronically commutated motor relative to a threshold. The control signal is proportional to a commanded speed for the electronically commutated motor. The method further includes using the circuit to automatically switch between providing a continuous or proportional direct current output to the electronically commutated motor when the control signal is above the threshold and providing a pulse voltage direct current output to the electronically commutated motor when the control signal is below the threshold. The pulse voltage direct current output may be used to run the electronically commutated motor at an average speed that is below its minimum rated speed. The continuous direct current output may be used to run the electronically commutated motor at an average speed that is above its minimum rated speed.

BRIEF DESCRIPTION OF THE FIGURES

The disclosure will become more fully understood from the following detailed description, taken in conjunction with the accompanying figures, wherein like reference numerals refer to like elements, in which:

FIG. 1A is a block diagram of a controller for an EC motor, according to an exemplary embodiment;

FIG. 1B is a simplified logic diagram of the memory of FIG. 1A, according to an exemplary embodiment;

FIG. 2 is a graph illustrating performance of a conventional controller and EC motor, according to an exemplary embodiment;

FIG. 3 is a graph illustrating a conventionally controlled EC motor for controlling pressure based on sensor input, according to an exemplary embodiment;

FIG. 4-5 are graphs illustrating the hybrid nature of the controller's output of a controller of the present invention, according to exemplary embodiments;

FIG. 6 is a graph illustrating an exemplary pulse generation scheme of a controller of the present invention, according to an exemplary embodiment; and

FIG. 7 is a graph illustrating a series of pulses output by a controller of the present invention, according to an exemplary embodiment.

DETAILED DESCRIPTION

Referring to the exemplary embodiments described herein, a controller for varying the voltage provided to an EC motor includes electronics configured to generate both a pulse voltage direct current output and a proportional direct current output. The electronics are configured to run the EC motor at an average speed that is below its minimum rated speed using the pulse voltage direct current. The controller may provide the voltage in timed pulses to provide for improved control of processes in conditions calling for such a low motor speed. The controller can operate the EC motor in a hybrid fashion, switching to proportional voltage from pulse voltage once conditions call for a higher motor speed, and vice versa.

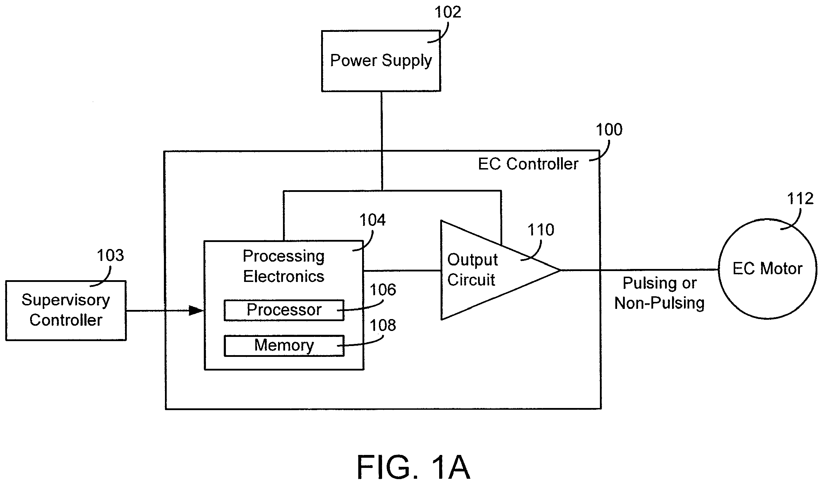

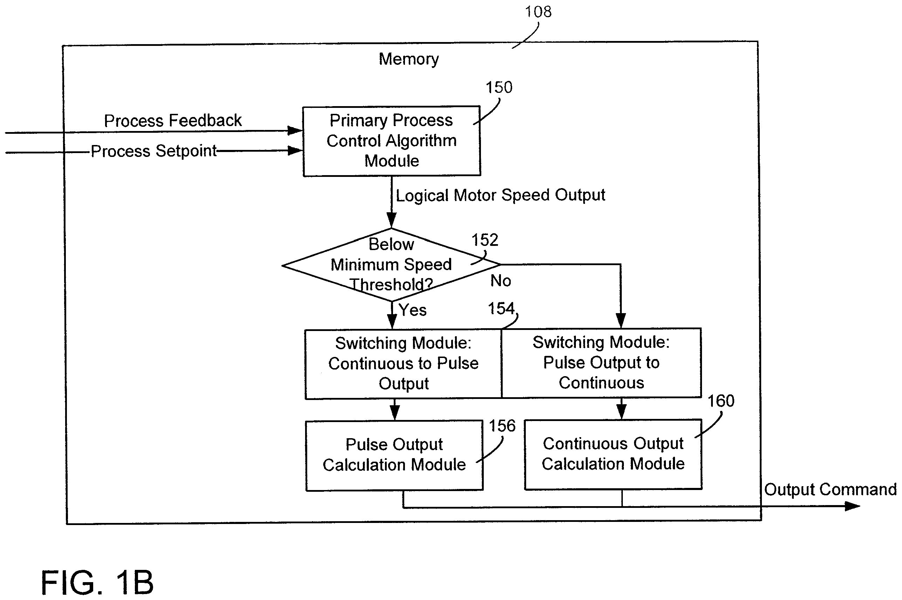

Referring now to FIG. 1, a block diagram of a controller 100 for an EC motor 112 is shown, according to an exemplary embodiment. Controller 100 includes processing electronics 104 and output circuit 110. Output circuit 110 is configured to convert control signals from processing electronics 104 (e.g., the determined logical output level, pulse timings, etc.) into volts direct current (vdc) pulses or analog (not pulsed) vdc output.

Power supply 102 is configured to power processing electronics 104 and analog output circuit 110. While power supply 102 is shown as distributed from controller 100, in varying exemplary embodiments, power supply 102 may be local to controller 100. The elements of controller 100 may be closely coupled (e.g., within the same housing, on the same circuit board, etc.) or more distributed (e.g., on multiple printed circuit boards (PCBs), housed in different cases, etc.). The power supply 102 may be or include a battery and/or may be or include another power source.

Processing electronics 104 are shown to include a processor 106 and memory 108. Processor 106 can be implemented as a general purpose processor, an application specific integrated circuit (ASIC), one or more field programmable gate arrays (FPGAs), a group of processing components, or other suitable electronic processing components. Processing electronics 104 can include one more PCBs or point-to-point wirings of electronic components including the processor and memory. Memory 108 may be one or more devices (e.g., RAM, ROM, flash memory, hard disk storage, etc.) for storing data and/or computer code for completing and/or facilitating the various processes or steps described in the present disclosure. Memory 108 may be or include volatile memory or non-volatile memory. Memory 108 may include database components, object code components, script components, or any other type of information structure for supporting the various activities and information structures described in the present disclosure. According to an exemplary embodiment, memory 108 is communicably connected to processor 106 via processing electronics 104 and includes computer code for executing (e.g., by the processing electronics and/or processor) one or more processes described herein. According to an exemplary embodiment, memory 106 may include a number of modules and databases that may be executed, accessed, or otherwise utilized by the processor/processing electronics to provide the activities described herein, according to varying exemplary embodiments. Other configurations of processing electronics 104 may be provided according to various other exemplary embodiments.

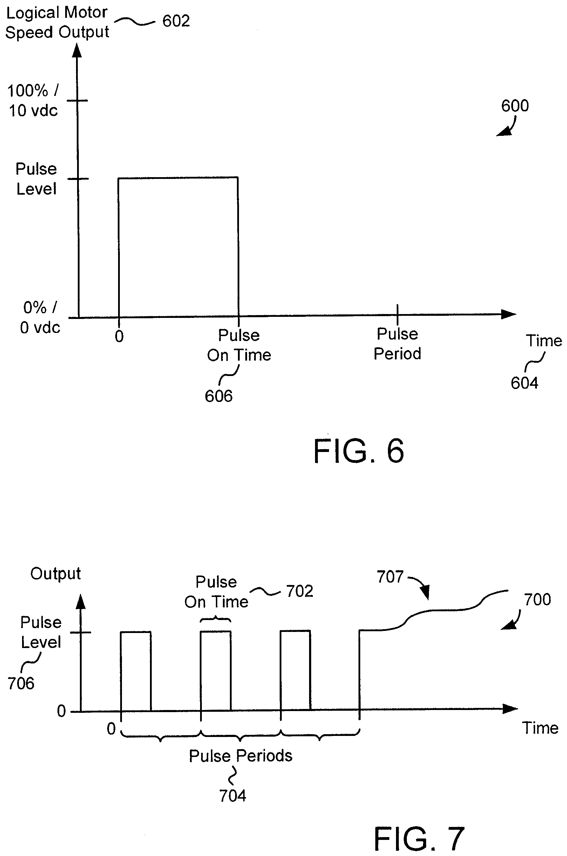

Processing electronics 104, and more particularly processor 106, the modules in memory 108, and output circuit 112 may be configured to control EC motor 114. Processing electronics 104 are shown to receive an input (e.g., from a supervisory controller or other source) indicating the minimum speed motor voltage of EC motor 112 and a pulse period setting. The motor voltage at the minimum speed and the pulse period setting may also be stored in memory 108. In varying embodiments, the minimum speed or pulse period may be fixed within memory 108 for each different type or model of EC motor controlled. In other embodiments, the minimum speed and pulse period setting may be stored in memory 108 after receiving input from another device such as the supervisory controller or user input device (e.g., keypad, buttons, etc.). Processing electronics 104 may use the inputs to conduct the activities described herein. The minimum speed threshold may be used as described with reference to subsequent figures including FIG. 1B. The pulse period setting may be used by pulse output calculation module 156 shown in FIG. 1B and according to a calculation as shown with respect to FIGS. 6 and 7.

In an exemplary embodiment, the processing electronics 104 calculates continuous output, pulses, or other commands and provides such outputs, pulses, or other commands to output device/circuit 110 for amplification and output to EC motor 112. Output circuit 110 may be an analog output circuit capable of non-pulse output and constant voltage or constant current output as well as pulse output. The operations of processing electronics 104 and controller 100 are shown in greater detail with reference to subsequent figures.

According to an exemplary embodiment, FIG. 1B is a simplified logic diagram of the memory 108 of FIG. 1A. FIG. 1B illustrates one possible logic flow for providing the hybrid control of an electronically commutated motor. Memory 108 is shown to include a primary process control algorithm 150. Primary process control algorithm 150 may be a proportional (P) algorithm, a proportional plus integral (PI) algorithm, a proportional-integral-derivative (PID) algorithm, or any type of algorithmic module that uses process variables (e.g., feedback variables, setpoint variables, measurements, etc.) and converts such process variables into a logical motor speed output (or some value representative of motor speed output. Using the logical motor speed output calculated by primary process variable 150, a comparator 152 determines whether the logical motor speed output is below a minimum speed threshold. If the logical motor speed output is not below a minimum speed threshold, a switching module 154 switches or maintains the output provided to the electronically commutated motor as continuous output. If the logical motor speed output is below a minimum speed threshold, the switching module 154 switches or maintains the output provided to the electronically commutated motor as pulse output. If the output is determined to properly be continuous, then the continuous output calculation module 160 determines an output for providing to the output device 110 shown in FIG. 1A. If the output is determined to properly be pulse, then the pulse output calculation module 156 determines an output for providing to the output device 110 shown in FIG. 1A. Exemplary calculations and activities for calculation module 156, switching module 154, and/or comparator 152 are shown and described with respect to subsequent Figures. Comparator 152 may be integrated with switching module 154 in varying embodiments. Continuous output calculation module 160 and pulse output calculation module 156 may be configured differently (e.g., to calculate different outputs expected to provide different amplitudes to the electronically commutated motor) depending on the characteristics of the output device 110 and/or the characteristics of the electronically commutated motor 112.

While FIG. 1B illustrates a controller configuration wherein the activity of the present application is driven by modules stored in memory (e.g., executable computer-code modules stored in non-transitory computer readable media), varying embodiments of the present application can also be implemented by discrete electronics components not stored in memory and executable by a processor.

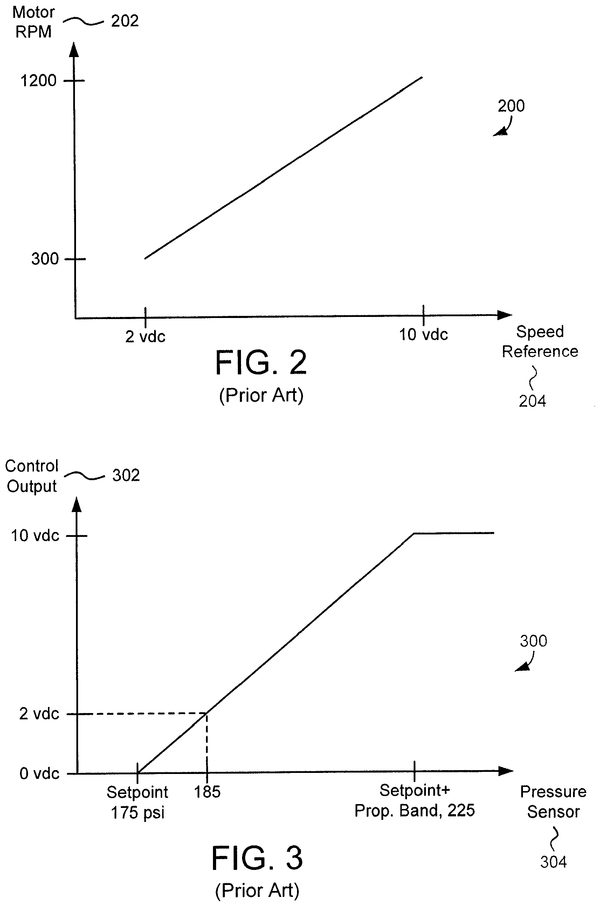

Referring to FIG. 2, a graph illustrating performance of a conventional controller and EC motor is shown. A conventional EC motor accepts an input signal over a range of vdc. The speed of the EC motor varies based on the voltage input to the EC motor. Graph 200 depicts a relationship between the speed 202 of an EC motor and the speed reference 204 supplied to the motor for a conventional controller and EC motor. For example, if an EC motor accepts an input signal in the range of 0-10 vdc, the motor speed increases toward its maximum rated speed as the input approaches 10 vdc. However, on the low end of the input range (e.g., 0-2 vdc), the motor is not sufficiently energized and does not run at all (as illustrated by the motor RPM graph line). When the minimum input voltage (i.e., speed reference) is reached, the EC motor will typically run at a pre-established or fixed minimum speed (e.g., 300 RPM). Different EC motors have different minimum speeds and different vdc to speed relationships. The EC motor of graph 200 will not run at less than 300 RPM (revolutions per minute), and for a proportional controller that generates a 0-10 vdc output signal in response to deviations from the process setpoint, the EC motor does not respond until the controller has generated an output of at least 2 vdc. Stated another way, in some situations, the EC motor will not start to have an impact on the process being controlled until the deviation from setpoint is equal to 20% of the proportional band.

One application for EC motor driven fans is to help controllably maintain the discharge pressure of a condenser in a refrigeration loop (e.g., in a building cooling system). The fan coupled to the EC motor is configured to blow cold air across the condenser, lowering the condenser's discharge pressure. When the ambient air is relatively cold, very little air flow is needed to maintain the desired pressure. With a traditionally controlled EC motor and a cold environment, discharge pressure oscillation can occur. The traditionally controlled EC motor cannot maintain low speeds as it turns off in response to low vdc inputs.

Referring to FIG. 3, graph 300 illustrates such a conventionally controlled EC motor for controlling pressure based on sensor input. Graph 300 illustrates the relationship between the controller output 302 and input from the pressure sensor 304. In graph 300, a conventional controller may be configured to seek a pressure setpoint of 175 psi to 225 psi (pound per square inch). The conventional controller increases its voltage output as the pressure rises above 175 psi. The controller reaches a maximum output of 10 vdc at 225 psi. The proportional band in the example of FIG. 3 is 175-225, a magnitude of 50 psi. A conventional controller would not cause the EC motor of FIG. 2 to run until the pressure had reached 185 psi (with the controller generating a 2 vdc output).

Summarizing the problems provided by the prior art controller and EC motor of Figs. 2-3, the motor of FIGS. 2-3 does not run at less than 300 rpm when provided proportional vdc and this limitation prevents the motor from running until there is a large error (e.g., 20%) in the setpoint versus sensor relationship.

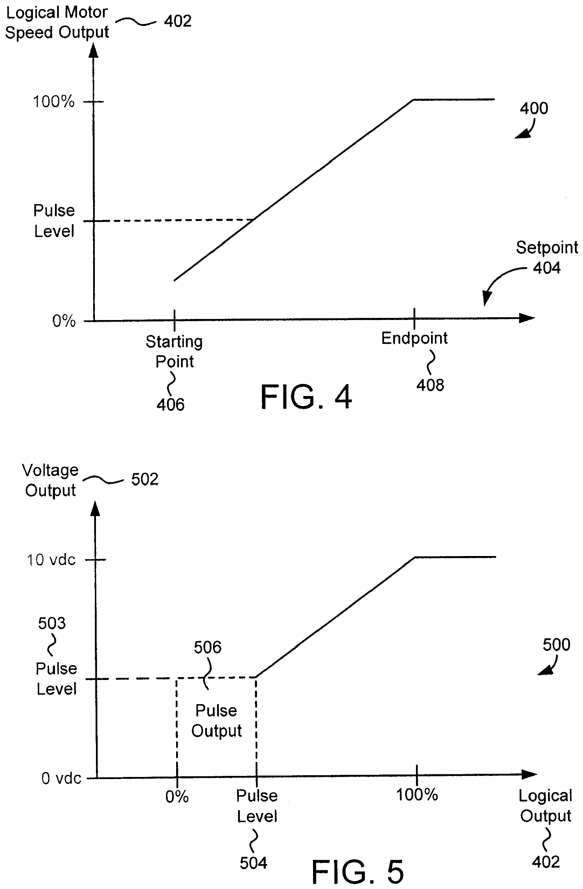

Referring back to previous Figures (e.g., Fig. 1A, Fig. IB), in order to cause the EC motor to run slower than its minimum rated speed, the EC motor 112 is controllably provided timed pulses (i.e., of vdc) configured to result in an average EC motor speed that is below the EC motor's rated minimum. In other words, the motor is effectively able to operate below the minimum speed that the EC motor would reach were the input limited to continuously variable vdc below the minimum vdc sufficient to cause rotation of the EC motor. The timed pulses themselves are above the minimum vdc sufficient to cause rotation of the EC motor. The timed pulses may have an amplitude fixed some voltage amount or percentage above the minimum vdc sufficient to cause rotation of the EC motor, fixed to coincide with an efficiency curve of the EC motor, variable within a portion of the efficiency curve, be user configured, or may be otherwise set to be above the minimum vdc sufficient to cause rotation of the EC motor. The pulse period may also be controlled based on user settings or control algorithms of the controller. If held constant rather than pulsed, the controller vdc output would result in a motor speed above the minimum. By repeatedly ending pulses and beginning pulses, the motor is caused to rotate at an average speed that is below the rated minimum over time. As illustrated in Figs. 4-5, the controller of FIGS. 1A, 1B causes such pulses to be output to the EC motor in what would be the lower part of its proportional band, when a lower speed is desired from the motor (e.g., due to user input, due to a feedback loop, due to another control algorithm). At high regions of the proportional band, the standard vdc output is generated. The controller automatically transitions between pulse output and proportional vdc output.

Referring further to FIGS. 4-5, graphs 400, 500 illustrate the hybrid nature of the controller's output. Pulses are delivered to the EC motor (e.g., EC motor 112) in the lower part of the proportional band (where a lower speed is called for due to control conditions). At higher regions of the proportional band, the standard vdc output is varied (but constantly applied) with sensor feedback and provided to EC motor 112. The controller (e.g., controller 100) automatically transitions (i.e., switches, selects, etc.) between these two output regions, providing a hybrid analog output controller for EC motor 112.

Graph 400 illustrates the magnitude of the controlled output 402 based on a setpoint 404 (e.g., calculated by control logic of the controller based on sensor input and/or a commanded setpoint or setpoints). Logical output 402 represents the magnitude of the controlled output (e.g., a value for the motor output based on the setpoint 404). Logical output 402 is expressed as a percentage from 0% to 100%. The setpoint 404 is the target or desired value for a variable (e.g., pressure, temperature, flow, etc.) for a process under control (e.g., whether the process is based on a feedback loop, a feedforward loop, an open loop, or another type of process control). The endpoint 408, along with starting point 406, defines the logical proportional band of the output for the EC motor. As illustrated in FIG. 4, the logical motor speed output or controlled output 402 varies as the setpoint 404 varies across the proportional band from starting point 406 to endpoint 408. Below the pulse level shown on graph 400, the controller 100 is configured to provide pulse output to EC motor 112. Above the pulse level shown on graph 400, the controller 100 is configured to provide non-pulse vdc output (e.g., continuous vdc, varying vdc, proportional vdc, etc.) is provided to EC motor 112.

Referring to FIG. 5, graph 500 illustrates the voltage output 502 based on logical output 402. A pulse level 504 is shown for logical output 402. Pulse level 504 defines the point at which controller 100 will switch between generating a pulse output signal and a constantly applied (but possibly or likely varying) vdc. Pulse level 504 may be user, controller, or supervisory controller adjustable. Pulse level may be set at or slightly higher than the minimum vdc level necessary to cause rotation of the motor. For example, a user may vary the pulse level between 0% and 100%, with 0% being no pulse output (or no effective pulse output) and 100% being maximum pulse output before becoming continuous output. When the calculated logical output 402 is greater than pulse level 504, a non-pulse vdc is generated. When logical output 402 is less than pulse level 504, pulse output is calculated, generated, and output to the EC motor. Fig. 5 illustrates a pulse output region 506 based on pulse level 504 and/or pulse level 503. As Fig. 5 illustrates, a threshold between pulse output and varying non-pulse output may be based on a comparison between commanded voltage output to a voltage-based pulse level or threshold 503 and/or a comparison between a logical output to a pulse level or threshold 504.

Referring now to FIG. 6, graph 600 illustrates an exemplary pulse generation scheme (e.g., for implementation by controller 100 of Fig. 1). Graph 600 illustrates a scheme in which a controller generates a pulse magnitude (i.e., amplitude, level, etc.) that is fixed (e.g., the pulse voltage does not vary from pulse to pulse). In such an embodiment, controller 100 (i.e., the processing electronics 104 controlling analog output circuit 110) adjusts the duration of the pulses (or the pauses between the pulses) as a function of the logical motor speed output or voltage 602. As discussed above, the logical motor speed output or voltage 602 may be based on a control algorithm that calculates a setpoint and adjusts motor speed based on a sensed deviation from the setpoint. Other control variables or algorithms may be used by the controller and/or a supervisory controller to select a logical motor speed output/voltage 602. The control algorithm may take into account any number of different variable types (e.g., target pressure, target fan speed, target temperature, etc.) in view of any number or types of sensor information (e.g., sensed pressure, sensed speed, sensed temperature) or other data (e.g., user inputs, requests from other devices). In an exemplary embodiment, the pulses are generated and delivered on a set time period (e.g., the front edge of the pulse begins with the time period). In varying embodiments, the pulse level and the pulse period may be user configurable parameters, preselected, or obtained from a remote source (e.g., a supervisory controller via a wired connection, via a network, via a wireless transceiver).

Referring to graph 600, the pulse on time 606 is a calculated "on time" portion of the pulse signal (e.g., the duty cycle) that is calculated to cause the motor to reach a certain average speed (e.g., reach a certain number of revolutions per minute) or to provide a certain result (e.g., provide low pressure pumping, provide a low amount of cooling, etc.). During pulse on time 606, a vdc output is provided at the pulse level to EC motor 112. Graph 600 illustrates the logical or voltage output 602 versus a pulse period time 604. In the illustration of graph 600, the vdc pulse is provided during less than half of the pulse period.

In the exemplary embodiment of FIG. 6, when a pulse is generated by controller 100 for EC motor 112, its magnitude is caused to be fixed. The width of the pulse is determined based on the determined logical output relative to the pulse threshold or pulse level. A wider pulse (i.e., a pulse that takes more of each pulse period) causes EC motor 112 to run faster. In varying exemplary embodiments, different calculations may be used to calculate the width of the pulse (i.e., pulse on time). An exemplary calculation that is based on the logical output for the motor (e.g., normally calculated by the proportional controller), the pulse level, and the pulse period is shown below, where the pulse on time is in terms of seconds:

$$PulseOnTime = PulsePeriod - \left[\left(\frac{PulseLevel - LogicalOutput}{PulseLevel}\right) * PulsePeriod\right]$$

The result of the calculation is a pulse signal having an on time that scales from zero to the pulse period length. In some embodiments, the length of the calculated PulseOnTime may be used by the controller to determine when to switch from pulse output to continuously provided/varying vdc output.

The logical output is calculated by the standard analog control algorithm (e.g., the process appropriate control algorithm that determines a percentage of EC motor 112 output based on sensor feedback and a setpoint). Referring to FIG. 7, graph 700 illustrates a series of pulses output by a controller of the present invention to an electronically commutated motor. Based on pulse period 704 and pulse level 706, pulse on time 702 is calculated as described above. As illustrated in FIG. 7, the pulse on time of pulse 703 is increased following pulse 702, running the motor on average faster than the speed caused by pulse 702 but still below the minimum speed provided by continuous or analog voltage. Output 707 illustrates a switch to continuous or analog voltage when the controller determines that that the logical motor output speed should be above a minimum threshold. As is shown, output 707 can vary in an analog manner to provide for fine control of the speed of the motor over the minimum threshold. Below the threshold, speed adjustments are provided by adjusting the pulse on time. Above the threshold, speed adjustments are provided by adjusting the amplitude of the vdc output. In varying embodiments, both the amplitude and the pulse on time may be adjusted when operating below the minimum motor speed to provide for fine control in such regions.

Configurations of Various Exemplary Embodiments

The methods described herein may be computer-implemented methods and may be executed by one or more computer systems or electronic systems as described herein. Instructions for causing the computer systems to complete the activities of the above-described methods may be embodied on computer-readable media such as a CDROM, flash drive, or otherwise. All such embodiments of the disclosure are within the scope of the present disclosure.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures may show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps. It should be understood that the present application is not limited to the details or methodology set forth in the description or illustrated in the figures. It should also be understood that the terminology is for the purpose of description only and should not be regarded as limiting.

**Claims**

1.  A controller (100) for varying the voltage provided to an electronically commutated motor (112), comprising:

    a circuit configured to generate both a pulse voltage direct current output and a continuous direct current output, wherein the circuit is configured to run the electronically commutated motor (112) at an average speed that is below its minimum rated speed using the pulse voltage direct current, **characterised in that** the circuit is configured to automatically switch between providing the continuous direct current output when a controller speed setpoint (404) requires a motor speed above the minimum rated speed and providing the pulse voltage direct current output when the controller speed setpoint requires a motor speed below the minimum rated speed.

2.  The controller (100) of Claim 1, wherein the circuit is configured to provide the pulse voltage direct current in timed pulses to provide for the average speeds below the minimum rated speed for the electronically commutated motor (112).

3.  The controller (100) of Claim 1, wherein the circuit is configured to calculate a pulse duty cycle for providing the electronically commutated motor (112) to achieve average motor speed adjustments below the electronically commutated motor's minimum rated speed.

4.  The controller (100) of Claim 1, further comprising an analog output device configured to output the continuous direct current and wherein the same analog output device is used for the pulse voltage direct current output and the continuous direct current output.

5.  The controller (100) of Claim 1, wherein pulse voltage direct current output is discontinued for speeds above the minimum rated speed of the electronically commutated motor (112).

6.  The controller (100) of Claim 1, wherein the circuit comprises a processor (106) and memory (108) and the controller (100) further comprises a primary process control algorithm module (150) stored in the memory (108), wherein the output of the primary process control algorithm (150) is representative of a logical motor speed output.

7.  The controller (100) of Claim 6, wherein the circuit comprises a comparator (152) configured to compare the logical motor speed output to a value representative of the minimum rated speed.

8.  The controller (100) of Claim 7, wherein the circuit comprises a switching module (154) configured to switch between the continuous direct current input and the pulse voltage direct current.

9.  The controller (100) of Claim 8, wherein the circuit comprises a pulse output calculation module (156) configured to calculate a duty cycle for the pulse voltage direct output using the logical motor speed output.

**10.** A method for varying the voltage provided to an electronically commutated motor (112), comprising:

using a circuit to monitor a control signal for the electronically commutated motor (112) relative to a threshold, wherein the control signal is proportional to a commanded speed for the electronically commutated motor (112); and

**characterised in** using the circuit to automatically switch between providing a continuous direct current output to the electronically commutated motor (112) when the control signal is above the threshold and providing a pulse voltage direct current output to the electronically commutated motor (112) when the control signal is below the threshold.

**11.** The method of Claim 10, wherein the circuit is configured to provide the pulse voltage direct current in timed pulses to provide for the average speeds below the minimum rated speed for the electronically commutated motor (112).

**12.** The method of Claim 10, further comprising:

calculating the control signal using a primary process control algorithm (150).

**13.** The method of Claim 12, further comprising:

calculating a pulse duty cycle for the pulse voltage direct current based on the amplitude of the control signal calculated using the primary process control algorithm (150).

**Patentansprüche**

**1.** Steuervorrichtung (100) zum Verändern der an einen elektronisch kommutierten Motor (112) bereitgestellten Spannung, Folgendes umfassend:

einen Schaltkreis, der konfiguriert ist, sowohl einen Impulsspannungs-Gleichstromausgang als auch einen kontinuierlichen Gleichstromausgang zu erzeugen, wobei der Schaltkreis konfiguriert ist, den elektronisch kommutierten Motor (112) mit einer durchschnittlichen Drehzahl, die unter seiner Minimalnenndrehzahl liegt, unter Verwendung des Impulsspannungsgleichstroms laufen zu lassen, **dadurch gekennzeichnet, dass** der Stromkreis konfiguriert ist, automatisch zwischen einem Bereitstellen des kontinuierlichen Gleichstromausgangs, wenn ein Steuervorrichtungsdrehzahlsollwert (404) eine Motordrehzahl über der Minimalnenndrehzahl erfordert, und Bereitstellen des Impulsspannungs-Gleichstromausgangs, wenn der Steuervorrichtungsdrehzahlsollwert eine Motordrehzahl unter der Minimalnenndrehzahl erfordert, zu schalten.

**2.** Steuervorrichtung (100) nach Anspruch 1, wobei der Schaltkreis konfiguriert ist, den Impulsspannungs-Gleichstrom in zeitgesteuerten Impulsen bereitzustellen, um für die durchschnittlichen Drehzahlen unter der Minimalnenndrehzahl für den elektronisch kommutierten Motor (112) zu sorgen.

**3.** Steuervorrichtung (100) nach Anspruch 1, wobei der Schaltkreis konfiguriert ist, ein Impulstastverhältnis zum Bereitstellen des elektronisch kommutierten Motors (112) zu berechnen, um Durchschnittsdrehzahlanpassungen unter der Minimalnenndrehzahl des elektronisch kommutierten Motors zu erzielen.

**4.** Steuervorrichtung (100) nach Anspruch 1, ferner umfassend ein Analogausgabegerät, das konfiguriert ist, den kontinuierlichen Gleichstrom auszugeben, und wobei das gleiche Analogausgabegerät für den Impulsspannungs-Gleichstromausgang und den kontinuierlichen Gleichstromausgang verwendet wird.

**5.** Steuervorrichtung (100) nach Anspruch 1, wobei der Impulsspannungs-Gleichstromausgang für Drehzahlen über der Minimalnenndrehzahl des elektronisch kommutierten Motors (112) ausgesetzt wird.

**6.** Steuervorrichtung (100) nach Anspruch 1, wobei der Schaltkreis einen Prozessor (106) und einen Speicher (108) umfasst und die Steuervorrichtung (100) ferner ein im Speicher (108) gespeichertes Primärprozesssteueralgorithmusmodul (150) umfasst, wobei der Ausgang des Primärprozesssteueralgorithmus (150) für einen logischen Motordrehzahlausgang kennzeichnend ist.

**7.** Steuervorrichtung (100) nach Anspruch 6, wobei der Schaltkreis einen Komparator (152) umfasst, der konfiguriert ist, den logischen Motordrehzahlausgang mit einem für die Minimalnenndrehzahl kennzeichnenden Wert zu vergleichen.

8. Steuervorrichtung (100) nach Anspruch 7, wobei der Schaltkreis ein Schaltmodul (154) umfasst, das konfiguriert ist, zwischen dem kontinuierlichen Gleichstromeingang und dem Impulsspannungsgleichstrom zu schalten.

9. Steuervorrichtung (100) nach Anspruch 8, wobei der Schaltkreis ein Impulsausgangsberechnungsmodul (156) umfasst, das konfiguriert ist, ein Tastverhältnis für den Impulsspannungsdirektausgang unter Verwendung des logischen Motordrehzahlausgangs zu berechnen.

10. Verfahren zum Verändern der an einen elektronisch kommutierten Motor (112) bereitgestellten Spannung, Folgendes umfassend:

Verwenden eines Schaltkreises zum Überwachen eines Steuersignals für den elektronisch kommutierten Motor (112) bezogen auf einen Schwellenwert, wobei das Steuersignal zu einer Soll-Drehzahl für den elektronisch kommutierten Motor (112) in Verhältnis steht; und
**gekennzeichnet durch** das Verwenden des Schaltkreises zum automatischen Schalten zwischen dem Bereitstellen eines kontinuierlichen Gleichstromausgangs an den elektronisch kommutierten Motor (112), wenn das Steuersignal über dem Schwellenwert ist, und dem Bereitstellen eines Impulsspannungs-Gleichstromausgangs an den elektronisch kommutierten Motor (112), wenn das Steuersignal unter dem Schwellenwert ist.

11. Verfahren nach Anspruch 10, wobei der Schaltkreis konfiguriert ist, den Impulsspannungs-Gleichstrom in zeitgesteuerten Impulsen bereitzustellen, um für die durchschnittlichen Drehzahlen unter der Minimalnenndrehzahl für den elektronisch kommutierten Motor (112) zu sorgen.

12. Verfahren nach Anspruch 10, ferner Folgendes umfassend:

Berechnen des Steuersignals unter Verwendung eines Primärprozesssteueralgorithmus (150).

13. Verfahren nach Anspruch 12, ferner Folgendes umfassend:

Berechnen eines Impulstastverhältnisses für den Impulsspannungs-Gleichstrom auf der Grundlage der Amplitude des unter Verwendung des Primärprozesssteueralgorithmus (150) berechneten Steuersignals.

**Revendications**

1. Dispositif de commande (100) pour faire varier la tension fournie à un moteur à commutation électronique (112), comprenant :

un circuit configuré pour générer à la fois une sortie de courant continu de tension d'impulsion et une sortie de courant continu permanent, dans lequel le circuit est configuré pour faire fonctionner le moteur à commutation électronique (112) à une vitesse moyenne qui est en dessous de sa vitesse nominale minimale à l'aide du courant continu de tension d'impulsion, **caractérisé en ce que** le circuit est configuré pour permuter automatiquement entre la fourniture de la sortie de courant continu permanent lorsqu'un point de consigne de vitesse de dispositif de commande (404) requiert une vitesse de moteur au-dessus de la vitesse nominale minimale et la fourniture de la sortie de courant continu de tension d'impulsion lorsque le point de consigne de vitesse de dispositif de commande requiert une vitesse de moteur en dessous de la vitesse nominale minimale.

2. Dispositif de commande (100) selon la revendication 1, dans lequel le circuit est configuré pour fournir le courant continu de tension d'impulsion en impulsions minutées pour assurer les vitesses moyennes en dessous de la vitesse nominale minimale pour le moteur à commutation électronique (112).

3. Dispositif de commande (100) selon la revendication 1, dans lequel le circuit est configuré pour calculer un cycle de service d'impulsion à fournir au moteur à commutation électronique (112) pour parvenir à des réglages de vitesse de moteur moyenne en dessous de la vitesse nominale minimale du moteur à commutation électronique.

4. Dispositif de commande (100) selon la revendication 1, comprenant en outre un dispositif de sortie analogique configuré pour fournir en sortie le courant continu permanent et dans lequel le même dispositif de sortie analogique est utilisé pour la sortie de courant continu de tension d'impulsion et la sortie de courant continu permanent.

5. Dispositif de commande (100) selon la revendication 1, dans lequel la sortie de courant continu de tension d'impulsion est interrompue pour des vitesses au-dessus de la vitesse nominale minimale du moteur à commutation électronique (112).

6. Dispositif de commande (100) selon la revendication 1, dans lequel le circuit comprend un processeur (106) et une mémoire (108) et le dispositif de commande (100) comprend en outre un module d'algorithme de commande de processus primaire (150) stocké dans la mémoire (108), dans lequel la sortie de l'algorithme de commande de processus primaire (150) est représentative d'une sortie de vitesse de moteur logique.

7. Dispositif de commande (100) selon la revendication 6, dans lequel le circuit comprend un comparateur (152) configuré pour comparer la sortie de vitesse de moteur logique à une valeur représentative de la vitesse nominale minimale.

8. Dispositif de commande (100) selon la revendication 7, dans lequel le circuit comprend un module de permutation (154) configuré pour permuter entre l'entrée de courant continu permanent et le courant continu de tension d'impulsion.

9. Dispositif de commande (100) selon la revendication 8, dans lequel le circuit comprend un module de calcul de sortie d'impulsion (156) configuré pour calculer un cycle de service pour la sortie continue de tension d'impulsion à l'aide de la sortie de vitesse de moteur logique.

10. Procédé pour faire varier la tension fournie à un moteur à commutation électronique (112), comprenant :

l'utilisation d'un circuit pour surveiller un signal de commande pour le moteur à commutation électronique (112) par rapport à un seuil, dans lequel le signal de commande est proportionnel à une vitesse ordonnée pour le moteur à commutation électronique (112) ; et

**caractérisé par** l'utilisation du circuit pour permuter automatiquement entre la fourniture d'une sortie de courant continu permanent au moteur à commutation électronique (112) lorsque le signal de commande est au-dessus du seuil et la fourniture d'une sortie de courant continu de tension d'impulsion au moteur à commutation électronique (112) lorsque le signal de commande est en dessous du seuil.

11. Procédé selon la revendication 10, dans lequel le circuit est configuré pour fournir le courant continu de tension d'impulsion en impulsions minutées pour assurer les vitesses moyennes en dessous de la vitesse nominale minimale pour le moteur à commutation électronique (112).

12. Procédé selon la revendication 10, comprenant en outre :

le calcul du signal de commande à l'aide d'un algorithme de commande de processus primaire (150).

13. Procédé selon la revendication 12, comprenant en outre :

le calcul d'un cycle de service d'impulsion pour le courant continu de tension d'impulsion d'après l'amplitude du signal de commande calculé à l'aide de l'algorithme de commande de processus primaire (150).

FIG. 1A

EP 2 501 033 B1

FIG. 1B

Motor
RPM 〜 202

1200

300

2 vdc                              10 vdc       Speed
                                                Reference
200                                                 〜
                                                    204

FIG. 2
(Prior Art)

Control
Output 〜 302

10 vdc

2 vdc

0 vdc

Setpoint  185          Setpoint+          Pressure
175 psi                Prop. Band, 225    Sensor
                                              〜
300                                           304

FIG. 3
(Prior Art)

Logical Motor
Speed Output ~ 402

100% ----

Pulse
Level - - - - - - - - - - - -

400

Setpoint
~ 404

0% -

Starting
Point

406

Endpoint

408

FIG. 4

Voltage
Output ~ 502

10 vdc -

503
Pulse
Level - - - - - - -

506

Pulse
Output

500

0 vdc -

0%    Pulse
      Level

504

100%    Logical
        Output

402

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61453125 A

- WO 03038985 A